(19) Europäisches Patentamt
European Patent Office
Office européen des brevets

(11) **EP 2 484 032 B1**

(12) **EUROPÄISCHE PATENTSCHRIFT**

(45) Veröffentlichungstag und Bekanntmachung des Hinweises auf die Patenterteilung:
**16.10.2013 Patentblatt 2013/42**

(21) Anmeldenummer: **10745175.9**

(22) Anmeldetag: **17.08.2010**

(51) Int Cl.:
**H04B 17/00** (2006.01)

(86) Internationale Anmeldenummer:
**PCT/EP2010/005051**

(87) Internationale Veröffentlichungsnummer:
**WO 2011/038806 (07.04.2011 Gazette 2011/14)**

(54) **VORRICHTUNG UND VERFAHREN ZUR MESSUNG DER KANALQUALITÄTS-RÜCKMELDUNGEN VON MOBILSTATIONEN**

APPARATUS AND METHOD FOR MEASURING CHANNEL QUALITY FEEDBACK OF MOBILE STATIONS

DISPOSITIF ET PROCÉDÉ DE MESURE POUR LA DÉTERMINATION DE QUALITÉ DE STATIONS MOBILES, PAR RETOUR DE QUALITÉ DU CANAL

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009 DE 102009043439**

(43) Veröffentlichungstag der Anmeldung:
**08.08.2012 Patentblatt 2012/32**

(73) Patentinhaber: **Rohde & Schwarz GmbH & Co. KG 81671 München (DE)**

(72) Erfinder:
• **KOTTKAMP, Meik**
**81379 München (DE)**
• **RÖSSLER, Andreas**
**Keller, Texas 76244 (US)**

(74) Vertreter: **Körfer, Thomas**
**Mitscherlich & Partner**
**Patent- und Rechtsanwälte**
**Sonnenstrasse 33**
**80331 München (DE)**

(56) Entgegenhaltungen:
**US-A1- 2006 023 745**

• **"3rd Generation Partnership Project; Technical Specification Group Radio Access Network; User Equipment (UE) radio transmission and reception (FDD) (Release 8)" 3GPP STANDARD; 3GPP TS 25.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V8.7.0, 1. Mai 2009 (2009-05-01), Seiten 1-215, XP050365879**

**Beschreibung**

Die Erfindung betrifft eine Messvorrichtung zur Bestimmung der Kanalqualitäts-Rückmeldungs-Qualität von Mobilstationen in Mobilfunk-Kommunikationssystemen und ein Verfahren zur Bestimmung der Kanalqualitäts-Rückmeldungs-Qualität von Mobilstationen in Mobilfunk-Kommunikationssystemen.

Herkömmlich melden Mobilstationen in Mobilfunksystemen die Qualität des Kommunikationskanals als Kanalqualitäts- Rückmeldung, im Folgenden Kanalqualitäts- Feedback, zurück an die mit der Mobilstation verbundene Basisstation. Durch Anpassung z.B. des Modulationsverfahrens wird eine Maximierung der bei gegebenem Spektrum erreichbaren Übertragungsrate erzielt. Die Basisstation kann so eine optimale Übertragung gewährleisten. Üblicherweise wird hierzu von der Mobilstation das Signal- Rausch- Verhältnis empfangener bekannter Daten ermittelt. Hieraus wird ein Kanalqualitäts- Feedback (Kanalqualitäts- Rückmeldung) erzeugt und an die Basisstation zurück übermittelt.

So zeigt z.B. die US-Patentanmeldung US 2007/0064632 A1 ein Mobilfunksystem, in welchem Mobilstationen ein Kanalqualitäts-Feedback an die Basisstation senden. Anhand des Kanalqualitäts-Feedbacks der Mobilstation stellt die Basisstation die Modulation ein. Eine Erhöhung der erreichbaren Übertragungsrate ist so möglich.

Die US Patentanmeldung US 2006/0023745 A1 zeigt ein System und Verfahren zur Optimierung der Übertragungskapazität von MIMO-Kommunikationssystemen. Hierzu wird eine Abschätzung einer Kanalqualität durchgeführt.

In zukünftigen Mobilfunksystemen wird MIMO (Multiple In Multiple Out; gemultiplexter Eingang - gemultiplexter Ausgang) eingesetzt werden. d.h. mehrere Sendeantennen und mehrere Empfangsantennen werden jeweils genutzt. Zur weiteren Erhöhung der Kapazität können über die mehreren Sendeantennen unterschiedliche Daten gesendet werden. Das Signal-Rausch-Verhältnis der mehreren einzelnen Kommunikationskanäle genügt nun nicht mehr, um die Kanalqualität zuverlässig zu beurteilen.

Der Erfindung liegt die Aufgabe zu Grunde, eine Messvorrichtung und ein Messverfahren zur Bestimmung von Kanalqualitäts-Feedback-Werten und somit zur Beurteilung der Kanalqualität-Feedback-Qualität von Mobilstationen mit hoher Genauigkeit zu schaffen.

Die Aufgabe wird erfindungsgemäß für die Vorrichtung durch die Merkmale des unabhängigen Anspruchs 1 und für das Verfahren durch die Merkmale des unabhängigen Anspruchs 9 gelöst. Vorteilhafte Weiterbildungen sind Gegenstand der hierauf rückbezogenen Unteransprüche.

Eine erfindungsgemäße Messvorrichtung von Mobilstationen beinhaltet eine Basisstation, eine Mobilstation und ein Messgerät. Das Messgerät beinhaltet dabei zumindest zwei Antennen und eine Verarbeitungseinrichtung. Das Messgerät und die Mobilstation empfangen jeweils mittels zumindest zweier Antennen Signale von denselben zumindest zwei Antennen der Basisstation. Die Mobilstation ermittelt aus den von ihr empfangenen Signalen einen ersten Kanalqualitäts-Feedback-Wert. Die Verarbeitungseinrichtung bestimmt die Orthogonalität der von dem Messgerät empfangenen Signale. Die Verarbeitungseinrichtung ermittelt aus der Orthogonalität einen zweiten Kanalqualitäts-Feedback-Wert. Die Verarbeitungseinrichtung bestimmt daraus und aus dem Kanalqualitäts-Feedback-Wert der Mobilstation dessen Qualität. So ist eine genaue Beurteilung der Qualität des Kanalqualitäts-Feedback-Wert der Mobilstation bei geringem Aufwand möglich.

Die Mobilstation ermittelt aus den von ihr empfangenen Signalen bevorzugt das Signal-Rausch-Verhältnis und ermittelt hieraus einen dritten Kanalqualitäts-Feedback-Wert. Eine sehr einfache Bestimmung des Kanalqualitäts-Feedback-Werts ist so möglich.

Die Mobilstation bestimmt bevorzugt die Orthogonalität der von ihr empfangenen Signale der zumindest zwei Antennen der Basisstation und ermittelt hieraus einen vierten Kanalqualitäts-Feedback-Wert. Eine hohe Genauigkeit der Beurteilung des Kanalqualitäts-Feedback-Wert der Mobilstation ist so möglich.

Das Messgerät und die Mobilstation sind bevorzugt mit einer Datenleitung oder einer Funkverbindung miteinander verbunden. So ist eine Beurteilung des Kanalqualitäts-Feedback-Werts der Mobilstation anhand von Nutzdaten möglich.

Die Verarbeitungseinrichtung bestimmt bevorzugt die Orthogonalität der empfangenen Signale anhand von bekannten Signalanteilen der von der Basisstation gesendeten Signale. Eine sehr einfache Bestimmung des Kanalqualitäts-Feedback-Werts ist so möglich.

Die Mobilstation baut während der Messung bevorzugt eine Kommunikationsverbindung zu der Basisstation auf. Das Messgerät baut dabei bevorzugt keine Kommunikationsverbindung zu der Basisstation auf. Die Verarbeitungseinrichtung bestimmt die Orthogonalität bevorzugt anhand von durch das Messgerät empfangenen Kontrollkanal-Signalen der Basisstation. Eine sehr einfache Bestimmung des Kanalqualitäts-Feedback-Werts ist so möglich. Insbesondere ist keine Entschlüsselung von übertragenen Nutzdaten notwendig.

Die Mobilstation und das Messgerät bauen alternativ während der Messung jeweils eine Kommunikationsverbindung zu der Basisstation auf. Eine sehr genaue Bestimmung des Kanalqualitäts-Feedback-Werts ist so möglich, da auch das Messgerät Nutzdaten empfängt und entschlüsseln kann.

Das Messgerät verfügt weiterhin bevorzugt über eine Anzeigeeinrichtung, auf welcher es die Qualität des Kanalqualitäts-Feedback-Werts der Mobilstation anzeigt. Eine sehr einfache Bedienung der Messvorrichtung ist so möglich.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:

Fig. 1     ein beispielhaftes MIMO-Übertragungssystem;

Fig. 2     ein Blockschaltbild des beispielhaften MIMO-Übertragungssystems;

Fig. 3a    ein erstes Übertragungsschema des beispielhaften MIMO-Übertragungssystems;

Fig. 3b    ein zweites Übertragungsschema des beispielhaften MIMO-Übertragungssystems;

Fig. 4     ein Ausführungsbeispiel der erfindungsgemäßen Messvorrichtung, und

Fig. 5     ein Ausführungsbeispiel des erfindungsgemäßen Messverfahrens.

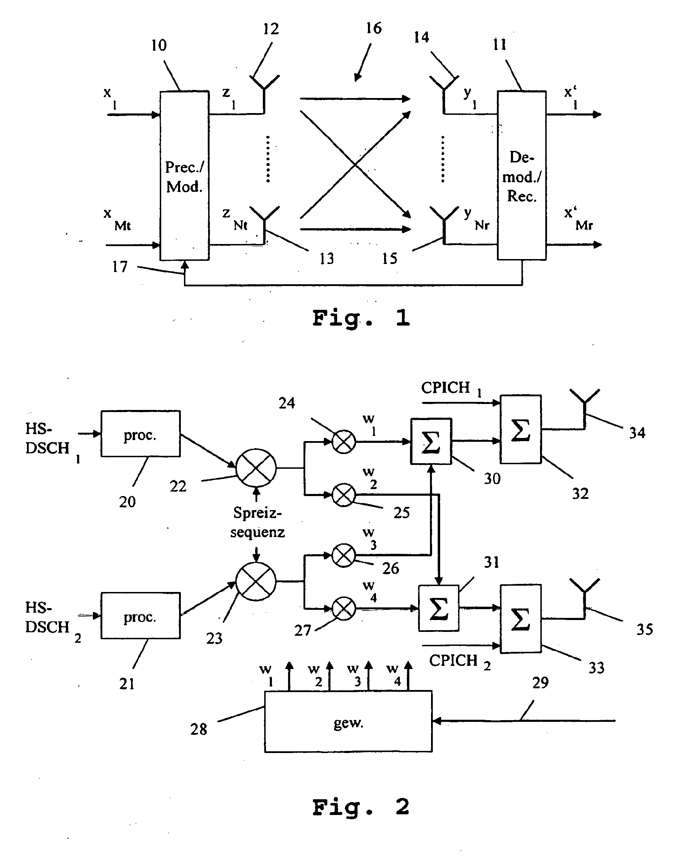

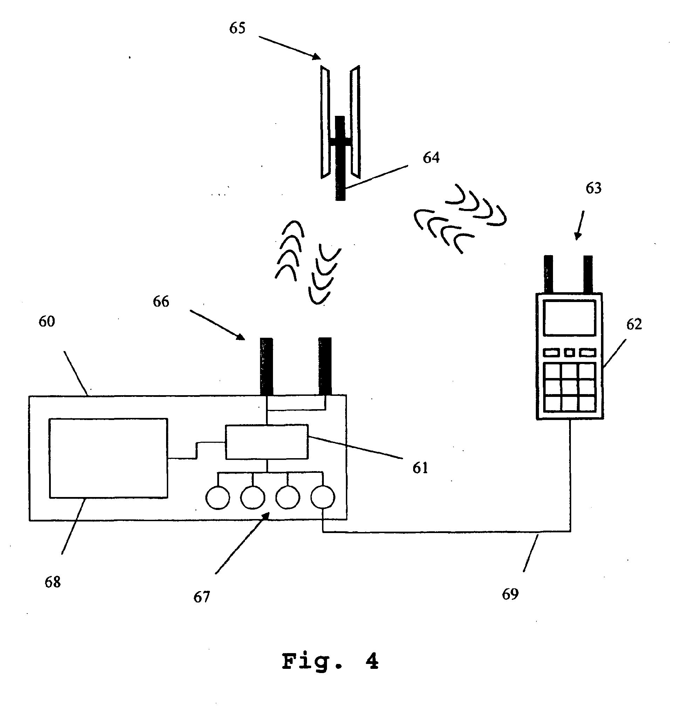

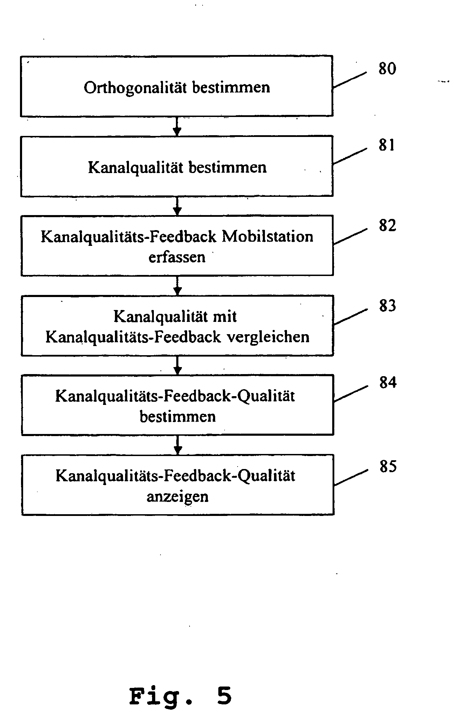

Zunächst wird anhand der Figuren 1 - 3b der Aufbau und die Funktionsweise von MIMO-Kommunikationssystemen erläutert. Mittels Fig. 4 wird anschließend der Aufbau und die Funktionsweise der erfindungsgemäßen Messvorrichtung veranschaulicht. Abschließend wird anhand der Fig. 5 die Funktionsweise des erfindungsgemäßen Messverfahrens dargestellt. Identische Elemente wurden in ähnlichen Abbildungen zum Teil nicht wiederholt dargestellt und werden nicht wiederholt beschrieben.

In Fig. 1 wird ein beispielhaftes MIMO- Übertragungssystem dargestellt. Von einer Datenquelle, welche hier nicht dargestellt ist, z.B. einer Basisstation, werden mehrere Datenströme $x_1$- $x_{Mt}$ erzeugt und an eine Vorkodierungs- Modulations- Einrichtung 10 (Precoding- Modulations- Einrichtung) übertragen. Die Vorkodierungs- Modulations- Einrichtung 10 (Precoding- Modulations- Einrichtung) verteilt die mehreren Signale $x_1$- $x_{Mt}$ auf mehrere Signalausgänge und führt eine Vorcodierung (Precoding) durch. D.h. die einzelnen Signale $x_1$- $x_{Mt}$ werden mit Wichtungsfaktoren gewichtet und zum Teil zusammengefügt. Hierauf wird näher anhand der Fig. 2 eingegangen. Innerhalb der Vorkodierungs- Modulations- Einrichtung 10 (Precoding- Modulations- Einrichtung) ergeben sich somit digitale Ausgangssignale für eine Mehrzahl an Antennen 12, 13.

Die digitalen Ausgangssignale werden von der Vorkodierungs- Modulations- Einrichtung 10 (Precoding- Modulations- Einrichtung) zu analogen Ausgangssignalen $z_1$- $z_{Mt}$ moduliert. Diese Signale $z_1$- $z_{Mt}$ werden den mehreren Sendeantennen 12, 13 zugeführt. Die Sendeantennen 12, 13 senden die modulierten Signale $z_1$- $z_{Mt}$ aus. Die Sendeantennen 12, 13 befinden sich nicht an derselben räumlichen Position. Es ergeben sich somit unterschiedliche Übertragungskanäle 16 zu einer Mehrzahl an Empfangsantennen 14, 15. Eine optimale Übertragung ergibt sich, wenn die Signale, welche von einer Sendeantenne 12, 13 gesendet werden, lediglich von genau einer Empfangsantenne 14, 15 empfangen werden. Dies ist jedoch in der Regel nicht der Fall, da die Signale der Sendeantennen 12, 13 von mehreren Empfangsantennen 14, 15 empfangen werden.

Die von den Empfangsantennen 14, 15 empfangenen analogen Signale $y_1$ - $y_{Mr}$ werden von den Empfangsantennen 14, 15 an eine Demodulations-Empfangs-Einrichtung 11 übertragen. Die Demodulations-Empfangs-Einrichtung 11 demoduliert zunächst die analogen Signale $y_1$ - $y_{Mr}$ und rekonstruiert anschließend die gesendeten Signale $x_1$ - $x_{Mt}$. Sie gibt die rekonstruierten gesendeten Signale $x'_1$ - $x'_{Mr}$ an eine Datensenke, z.B. eine Mobilstation, aus.

Die Qualität der Übertragung wird dabei entscheidend davon beeinflusst, wie stark die Signale von einzelnen Sendeantennen 12, 13 von einzelnen Empfangsantennen 14, 15 gebündelt empfangen werden. Liegt der optimale Fall vor, dass die Signale einer Sendeantenne 12, 13 lediglich von einer Empfangsantenne 14, 15 empfangen werden, so ergibt sich für jedes Paar von Sendeantenne 12, 13 und Empfangsantennen 14, 15 ein völlig unabhängiger Übertragungskanal. Die Kapazitäten der Übertragungskanäle addieren sich somit. Tritt jedoch keinerlei Konzentration der gesendeten Signale auf einzelne Empfangsantennen 14, 15 auf, so ist die Gesamtkapazität der Übertragung deutlich verringert.

Die Demodulations- Empfangs- Einrichtung 11 ermittelt aus den empfangenen Signalen weiterhin einen Kanalqualitäts- Feedback- Wert, welchen sie über einen weiteren Kommunikationskanal 17 zurück an die Vorkodierungs- Modulations- Einrichtung 10 (Precoding- Modulations- Einrichtung) auf Sendeseite übermittelt. Die Vorkodierungs- Modulations- Einrichtung 10 (Precoding- Modulations- Einrichtung) stellt die Vorcodierung (Precoding) und die Modulation derart ein, dass bei der gegebenen Kanalqualität, welche von der Demodulations- Empfangs- Einrichtung 11 zurückgemeldet wird, eine optimale Übertragung erreicht wird. Die Demodulations- Empfangs- Einrichtung 11 ermittelt den Kanalqualitäts- Feedback- Wert anhand des Signal- Rausch- Abstandes der einzelnen Empfangsantenne 14, 15 bei bekannten Übertragungssymbolen. Das erfindungsgemäße Messgerät nutzt alternativ die Orthogonalität des Übertragungskanals 16 zur Ermittlung des Kanalqualität- Feedbacks. Auch eine Nutzung der Orthogonalität zur Bestimmung des Kanalqualitäts- Feedback- Werts durch die Mobilstation ist möglich.

Fig. 2 zeigt den Sende-Abschnitt eines beispielhaften MIMO-Übertragungssystems. Das hier eingesetzte Übertragungssystem verfügt über zwei Sendeantennen 34, 35. Eine Erweiterung auf eine höhere Anzahl ist jedoch ohne Weiteres denkbar. Das Übertragungssystem verfügt weiterhin über zwei Transportblock-Verarbeitungseinrichtungen 20, 21. Diese sind jeweils mit einem Mischer 22, 23 verbunden. Die Mischer 22, 23 sind jeweils mit zwei Mischern 24, 25, 26, 27 verbunden. Der Mischer 22 ist dabei mit den Mischern 24, 25 verbunden, während der Mischer 23 mit den Mischern 26, 27 verbunden ist. Die Mischer 24, 26 sind mit der Additionseinrichtung 30 verbunden. Die Mischer 25, 27 sind mit der Additionseinrichtung 31 verbunden. Die Additionseinrichtung 30 ist weiterhin mit der Additionseinrichtung 32 verbunden. Die Additionseinrichtung 31 ist weiterhin mit der Additionseinrichtung 33 verbunden. Die Additionseinrichtung 32, 33 sind jeweils über nicht dargestellte Modulations-Einrichtungen mit den Sendeantennen 34, 35 verbunden.

Eine Wichtungs-Einrichtung 28 ist darüber hinaus mit den Mischern 24 - 27 verbunden. Die Wichtungs-Einrichtung 28 ist weiterhin über eine Kommunikationsverbindung 29 mit der Empfangsseite der Übertragung verbunden.

Ein erster Transportblock HS-DSCH$_1$ (highspeed downlink shared channel 1) wird der Transportblock-Verarbeitungs-Einrichtung 20 zugeführt. Ein zweiter Transportblock HS-DSCH$_2$ (highspeed downlink shared channel 2) wird der zweiten Transportblock-Verarbeitungs-Einrichtung 21 zugeführt. Die Transportblock-Verarbeitungs-Einrichtungen 20, 21 verarbeiten die Transportblöcke HS-DSCH$_1$, HS-DSCH$_2$ weiter. Die Transportblöcke HS-DSCH$_1$, HS-DSCH$_2$ werden dabei von den Transportoblock-Verarbeitungs-Einrichtungen 20, 21 zu durchgehenden für die weitere Verarbeitung geeignete Signale zusammengefasst. Die Signale werden von den Transportblock-Verarbeitungs-Einrichtungen 20, 21 an die Mischer 22, 23 weitergeleitet. Zur Erhöhung der spektralen Breite und/oder zur Verschlüsselung werden die Signale von den Mischern 22, 23 mit einer Spreiz-Sequenz gemischt. Die Spreiz-Sequenz ist dabei ein digitales Signal, dessen Taktrate deutlich höher ist als die Taktrate der von den Transportblock-Verarbeitungs-Einrichtungen 20, 21 übertragenen Signale. Die resultierenden Signale der Mischer 22, 23 werden den weiteren Mischern 24 - 27 zugeführt. Das Signal des Mischers 22 wird dabei dem Mischer 24 und 25 zugeführt, während das Signal des Mischers 23 den Mischern 26, 27 zugeführt wird. Die Mischer 24 - 27 mischen die Signale jeweils mit einem Gewichtungssignal w$_1$ - w$_4$.

Die Gewichtungssignale w$_1$- w$_4$ werden dabei von der Wichtungs- Einrichtung 28 erzeugt. Die Wichtungs- Einrichtung 28 erzeugt die Gewichtungssignale w$_1$- w$_4$ basierend auf einem Kanalqualitäts- Feedback-Wert, welcher über eine Kommunikationsverbindung 29 von der Empfangsseite der Kommunikationsvorrichtung übertragen wird.

Die gewichteten Ausgangs-Signale der Mischer 24 - 27 werden den Additionseinrichtungen 30, 31 zugeführt. Dabei werden die Signale des Mischers 24 und des Mischers 26 der Additionseinrichtungen 30 zugeführt. Die Signale des Mischers 25 und des Mischers 27 werden der Additionseinrichtung 31 zugeführt. Die Signale am Ausgang der Additionseinrichtung 30, 31 bestehen weitgehend aus Nutzdaten. Sie werden den Additionseinrichtung 32, 33 zugeführt, welche jeweils Pilotsignale CPICH$_1$, CPICH$_2$ (common pilot channel 1, 2) hinzufügen. Die resultierenden Signale der Additionseinrichtungen 32, 33 werden von hier. nicht dargestellten Modulations-Einrichtungen zu jeweils einem analogen Signal moduliert und den Sendeantennen 34, 35 zugeführt. Die Sendeantennen 34, 35 senden das resultierende Signal jeweils aus.

Durch die Gewichtungssignale w$_1$ - w$_4$ wird die Verteilung der zu sendenden Signale auf die beiden Sendeantennen eingestellt. Eine optimale Nutzung der Kanalkapazität ergibt sich so. Der Kanalqualitäts-Feedback-Wert wird weiterhin von den Modulations-Einrichtungen, welche hier nicht dargestellt sind, zur Bestimmung des einzusetzenden Modulationsverfahrens herangezogen.

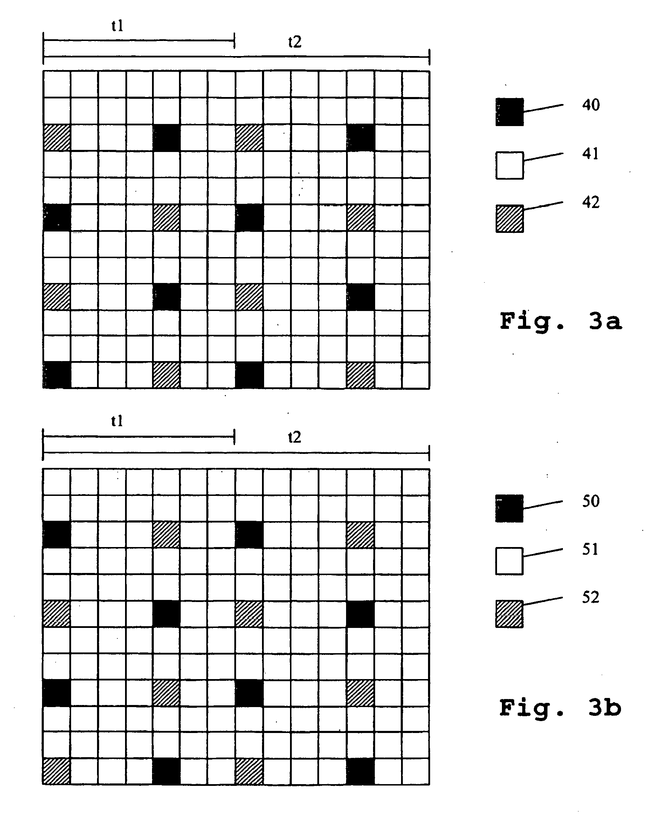

In Fig. 3a und Fig. 3b werden beispielhafte Sendesignale in einem MIMO- Übertragungssystem im Zeit- und FrequenzBereich dargestellt. Dabei zeigt Fig. 3a das von einer ersten Sendeantenne ausgesendete Signal, während Fig. 3b das von einer zweiten Sendeantenne ausgesendete Signal zeigt. Auf der Ordinate ist der Zeitverlauf des Sendesignals dargestellt. Auf der Abszisse ist jeweils die Frequenz aufgetragen. Die Zeitdauer t$_2$ entspricht dabei einem Unter- Rahmen (Subframe), welcher beispielsweise eine Länge von einer Millisekunde hat. Die Zeitdauer t$_1$ entspricht einem Zeitschlitz (time slot), welcher einer Länge von beispielsweise 0, 5 Millisekunden entspricht. Die einzelnen Blöcke 40, 41, 42, 50, 51, 52 sind dabei Abschnitte im Zeit- und Frequenz-Bereich, welche mit zu übertragenden Daten gefüllt werden können.

In Fig. 3a stellen die Blöcke 41 für die Übertragung von Nutzdaten vorgesehene Blöcke dar. Die Blöcke 40 werden hier zur Übertragung von Referenzsymbolen genutzt. Die Blöcke 42 werden nicht zur Übertragung von Signalen genutzt. In Fig. 3b werden die Blöcke 51 zur Übertragung von Nutzdaten genutzt, während die Blöcke 50 zur Übertragung von Referenzsymbolen genutzt werden. Die Blöcke 52 werden hier nicht zur Übertragung von Signalen genutzt. Die Referenzsymbole, welche in den Blöcken 40, 50 übertragen werden, sind vorab festgelegt, d.h. der Empfänger weiß bereits vor dem Empfang der Referenzsymbole 40, 50, welches Symbol erwartet wird.

Die Signale der beiden Sendeantennen, welche in den Fig. 3a und Fig. 3b dargestellt werden, werden von den Sendeantennen gleichzeitig ausgesendet. Die Referenzsymbole 40, 50 und die nicht zur Übertragung von Symbolen genutzten Blöcke 42, 52 unterscheiden sich dabei stets. Bei einer Einzel-Datenstrom-Übertragung (single stream transmission) sind die gleichzeitig von den beiden Sendeantennen ausgesendeten Nutzdaten 41, 51 identisch. Liegt eine Zwei-Datenstrom-Übertragung (dual stream transmission) vor, unterscheiden sich die Nutzdaten 41, 51, welche von den beiden Sendeantennen gleichzeitig ausgesendet werden. Die ausgesendeten Signale unterscheiden sich somit sowohl bei Einzel-Datenstrom-Übertragung (single stream transmission) wie auch bei Zwei-Datenstrom-Übertragung (dual stream transmission).

Fig. 4 zeigt ein Ausführungsbeispiel der erfindungsgemäßen Messvorrichtung. Eine Mobilstation 62 steht dabei mit einer Basisstation 64 in Kommunikationsverbindung. Die Mobilstation 62 verfügt dabei über zumindest zwei Antennen 63. Die Basisstation 64 verfügt dabei ebenfalls über zumindest zwei Antennen 65. Die Mobilstation 62 ist dabei mit einem Messgerät 60 verbunden. Die Verbindung erfolgt dabei beispielsweise mittels einer Leitung 69 und einem Anschluss 67 des Messgeräts 60. Das Messgerät 60 verfügt weiterhin über eine Verarbeitungseinrichtung 61, zumindest zwei Antennen 66 und eine Anzeigeeinrichtung 68. Die Anschlüsse 67 sind mit der Verarbeitungseinrichtung 61 verbunden. Die Antennen 66 und die Anzeigeeinrichtung 68 sind ebenfalls mit der Verarbeitungseinrichtung 61 verbunden. Das Messgerät 60 empfängt mittels seiner Antennen 66 ebenfalls Signale von der Basisstation 64. Es steht dabei jedoch nicht in einer Kommunikationsverbindung mit der Basisstation 64. In einer alternativen Ausgestaltung baut auch das Messgerät 60 eine stehende Kommunikationsverbindung mit der Basisstation 64 auf.

Die Basisstation 64 sendet mit ihren zumindest zwei Antennen 65 Signale, wie z.B. anhand der Fig.3a, Fig.3b gezeigt, aus. Die Signale werden über einen Kommunikationskanal, welcher verlustbehaftet ist, übertragen. Bei Realbedingungen ist nicht sichergestellt, dass die Signale einer Sendeantenne 65 jeweils nur von einer Empfangsantenne 63 der Mobilstation 62 bzw. einer Empfangsantenne 66 des Messgeräts 60 empfangen wird. Je höher die Orthogonalität der Ausbreitungspfade der beiden Sendeantennen zueinander ist, desto kleiner ist die gegenseitige Beeinträchtigung der ausgesendeten Datenströme. Die Orthogonalität der Ausbreitungspfade ist somit ein gutes Maß für die Qualität des Übertragungskanals.

Wie anhand von Fig. 3a und Fig. 3b gezeigt, werden bei modernen Kommunikationsverfahren, z.B. 3G, HSPA, LTE, unterschiedliche Referenzsignale bzw. Pilotsignale über die beiden Antennen ausgesendet. Anhand einer Kanalschätzung, welche auf diesen Referenzsignalen, bzw. Pilotsignalen basiert, kann die Orthogonalität der beiden Antennensignale zueinander am Empfangsort ermittelt werden. Durch die Kanalschätzung auf beiden Antennen kann die vollständige Kanalmatrix

$$\begin{bmatrix} h_{11} & h_{12} \\ h_{21} & h_{22} \end{bmatrix}$$

geschätzt werden. Ein Maß für die Orthogonalität der Antennenpfade ist z.B. die Invertierbarkeit der Matrix. Auch durch Vergleich der Koeffizienten $h_{12}$ und $h_{21}$ kann auf die Orthogonalität geschlossen werden.

Die Mobilstation 62 empfängt mittels ihrer zumindest zwei Empfangsantennen 63 die von der Basisstation 64 mittels ihrer zweier Sendeantennen 65 ausgesendeten Signale. Anhand der bekannten Pilotsymbole bzw. Referenzsymbole führt die Mobilstation 62 eine Kanalschätzung durch. Dabei ermittelt sie zumindest das Kanal- Rausch- Verhältnis. In einer alternativen Ausgestaltung ermittelt die Mobilstation 62 aus der Kanalschätzung zusätzlich die Orthogonalität der beiden Antennensignale am Empfangsort. Die Mobilstation 62 bestimmt ausgehend von der Kanalschätzung bzw. ausgehend von der Orthogonalität einen Kanalqualitäts- Feedback- Wert (Kanalqualitäts- Rückmeldungs- Wert), welchen sie über die Übertragungsleitung 69 an das Messgerät 60 überträgt. Das Messgerät 60 empfängt den Kanalqualitäts- Feedback- Wert über einen Anschluss 67 und leitet ihn an die Verarbeitungseinrichtung 61 weiter.

Gleichzeitig empfängt das Messgerät 60 mittels seiner beiden Empfangsantennen 66 das von der Basisstation 64 mittels seiner beiden Sendeantennen 65 ausgesendete Signal. Wie auch die Mobilstation 62 führt das Messgerät 60 eine Kanalschätzung anhand der bekannten Referenz- bzw. Pilotsignale durch. Das Messgerät 60 verfügt dabei über eine deutlich höhere Genauigkeit als die Mobilstation 62. Die Verarbeitungseinrichtung 61 des Messgeräts 60 nimmt die von den Sendeantennen 66 empfangenen Signale entgegen und führt die Kanalschätzung durch. Die Verarbeitungseinrichtung 61 bestimmt weiterhin ausgehend von der Kanalschätzung die Orthogonalität der empfangenen Signale. Weiterhin vergleicht die Verarbeitungseinrichtung 61 des Messgeräts 60 die selbst bestimmte Orthogonalität der Empfangssignale mit dem von der Mobilstation 62 übermittelten Kanalqualitäts- Feedback- Wert. Handelt es sich bei den Kanalqualitäts- Feedback- Werten der Mobilstation 62 um Orthogonalitätswerte, kann dieser Vergleich direkt erfolgen. Handelt es sich bei den Kanalqualitäts- Feedback- Werten der Mobilstation 62 um Signal- Rausch- Werte, so werden diese vor dem Vergleich in ein kompatibles Format umgerechnet. Dies kann z.B. durch Multiplikation, Logarithmierung, Potenzierung oder Addition erfolgen.

Die Verarbeitungseinrichtung 61 leitet die von ihr ermittelten Daten und/oder die von der Mobilstation übertragenen Qualitäts-Feedback-Werte an die Anzeigeeinrichtung 68 weiter. Das Messgerät 60 stellt diese Daten auf der Anzeigeeinrichtung 68 dar.

Befinden sich das Messgerät 60 und die Mobilstation 62 in großer räumlicher Nähe, so sind die Übertragungskanäle von der Basisstation 64 zu der Mobilstation 62 und zu dem Messgerät 60 vergleichbar. Durch Vergleich des Kanalqualität-Feedback-Werts der Mobilstation 62 mit einem von dem Messgerät 60 ermittelten idealen Kanalqualitäts-Feedback-Wert kann die Qualität des Kanalqualität-Feedbacks der Mobilstation ermittelt werden. Auch ein Maß für diese Qualität wird von dem Messgerät 60 auf der Anzeigeeinrichtung 68 dargestellt.

In Fig. 5 wird ein Ausführungsbeispiel des erfindungsgemäßen Messverfahrens gezeigt. In einem ersten Schritt 80 wird die Orthogonalität zweier von einer Basisstation ausgesendeter Signale ermittelt. Ausgehend von der Orthogonalität der beiden Signale wird in einem zweiten Schritt 81 die Kanalqualität des Übertragungskanals von der Basisstation zu dem Empfangsort bestimmt. In einem dritten Schritt 82 wird der Kanalqualitäts- Feedback- Wert einer Mobilstation erfasst. D.h. eine Mobilstation empfängt ebenfalls die von der Basisstation ausgesendeten Signale und ermittelt daraus einen Kanalqualitäts- Feedback- Wert, welcher in diesem Schritt erfasst wird. In einem vierten Schritt 83 wird der anhand der Orthogonalität bestimmte Kanalqualitäts- Feedback- Wert mit dem Kanalqualitäts- Feedback- Wert der Mobilstation verglichen. In einem fünften Schritt 84 wird anhand des Vergleichs der Kanalqualitäts- Feedback- Werte die Qualität des Kanalqualitäts- Feedback- Werts der Mobilstation ermittelt. In einem abschließenden sechsten Schritt 85 wird die Qualität des Kanalqualitäts- Feedback- Werts der Mobilstation angezeigt.

Die Erfindung ist nicht auf das dargestellte Ausführungsbeispiel beschränkt. So kann die Erfindung bei sämtlichen Kommunikationsverfahren, welche MIMO nutzen, eingesetzt werden. Auch eine Erweiterung auf eine höhere Antennenzahl ist möglich. Alle vorstehend beschriebenen Merkmale oder in den Figuren gezeigten Merkmale sind im Rahmen der Erfindung beliebig vorteilhaft miteinander kombinierbar.

**Patentansprüche**

1. Messvorrichtung mit einer Basisstation (64), einer Mobilstation (62) und einem Messgerät (60) mit zumindest zwei Antennen (66) und einer Verarbeitungseinrichtung (61),
   wobei die Verarbeitungseinrichtung (61) von dem Messgerät (60) beinhaltet ist,
   wobei das Messgerät (60) und die Mobilstation (62) ausgebildet sind, um mittels jeweils zumindest zweier Antennen (63, 66) Signale von denselben zumindest zwei Antennen (65) der Basisstation (64) zu empfangen, wobei die Mobilstation (62) ausgebildet ist, um aus den von ihr empfangenen Signalen einen ersten Kanalqualitäts-Feedback-Wert zu ermitteln,
   **dadurch gekennzeichnet,**
   **dass** die Verarbeitungseinrichtung (61) ausgebildet ist, um die Orthogonalität der von dem Messgerät (60) empfangenen Signale zu bestimmen,
   **dass** die Verarbeitungseinrichtung (61) ausgebildet ist, um aus der Orthogonalität einen zweiten Kanalqualitäts-Feedback-Wert ermittelt, und
   **dass** die Verarbeitungseinrichtung (61) ausgebildet ist, um aus dem von ihr ermittelten zweiten Kanalqualitäts-Feedback-Wert und dem ersten Kanalqualitäts-Feedback-Wert der Mobilstation (62) die Qualität des Kanalqualitäts-Feedback-Werts der Mobilstation (62) zu bestimmen.

2. Messvorrichtung nach Anspruch 1,
   **dadurch gekennzeichnet,**
   **dass** die Mobilstation (62) ausgebildet ist, um aus den von ihr empfangenen Signalen das Signal-Rausch-Verhältnis zu ermitteln, und
   **dass** die Mobilstation (62) ausgebildet ist, um aus den ermittelten Signal-Rausch-Verhältnissen einen dritten Kanalqualitäts-Feedback-Wert zu ermitteln.

3. Messvorrichtung nach Anspruch 1 oder 2,
   **dadurch gekennzeichnet,**
   **dass** die Mobilstation (62) ausgebildet ist, um die Orthogonalität der von ihr empfangenen Signale der zumindest zwei Antennen (65) der Basisstation (64) zu bestimmen, und
   **dass** die Mobilstation (62) ausgebildet ist, um aus der von ihr bestimmten Orthogonalität einen vierten Kanalqualitäts-Feedback-Wert zu ermitteln.

4. Messvorrichtung nach einem der Ansprüche 1 bis 3,
   **dadurch gekennzeichnet,**
   **dass** das Messgerät (60) und die Mobilstation (62) mit einer Datenleitung (69) oder einer Funkverbindung miteinander verbunden sind.

5. Messvorrichtung nach einem der Ansprüche 1 bis 4,
   **dadurch gekennzeichnet,**
   **dass** die Verarbeitungseinrichtung (61) ausgebildet ist, um die Orthogonalität der empfangenen Signale anhand von bekannten Signalanteilen der von der Basisstation (64) gesendeten Signale zu bestimmen.

6. Messvorrichtung nach einem der Ansprüche 1 bis 5,
   **dadurch gekennzeichnet,**
   **dass** die Mobilstation (62) ausgebildet ist, um während der Messung eine Kommunikationsverbindung zu der Basisstation (64) aufzubauen,
   **dass** das Messgerät (60) ausgebildet ist, um keine Kommunikationsverbindung zu der Basisstation (64) aufzubauen, und

**dass** die Verarbeitungseinrichtung (61) ausgebildet ist, um die Orthogonalität anhand von durch das Messgerät (60) empfangenen Kontrollkanal-Signalen der Basisstation (64) zu bestimmen.

7. Messvorrichtung nach einem der Ansprüche 1 bis 6, **dadurch gekennzeichnet,** **dass** die Mobilstation (62) und/oder das Messgerät (60) ausgebildet sind, um während der Messung jeweils eine Kommunikationsverbindung zu der Basisstation (64) aufzubauen.

8. Messvorrichtung nach einem der Ansprüche 1 bis 7, **dadurch gekennzeichnet,** **dass** das Messgerät (60) eine Anzeigeeinrichtung (68) aufweist, **dass** das Messgerät (60) ausgebildet ist, um die Qualität des Kanalqualitäts-Feedback-Werts der Mobilstation (62) mittels der Anzeigeeinrichtung (68) anzuzeigen.

9. Messverfahren zur Bestimmung von Kanalqualitäts-Feedback- Werten, wobei mittels jeweils zumindest zweier Antennen (63, 66) durch ein Messgerät (60) und durch eine zu vermessende Mobilstation (62) Signale von denselben zumindest zwei Antennen (65) einer Basisstation (64) empfangen werden, wobei ein erster Kanalqualitäts- Feedback- Wert aus den von der Mobilstation (62) empfangenen Signalen ermittelt wird, wobei die Orthogonalität der von dem Messgerät (60) empfangenen Signale bestimmt wird, **dadurch gekennzeichnet,** **dass** von dem Messgerät (60) aus der Orthogonalität ein zweiter Kanalqualitäts- Feedback- Wert ermittelt wird, und dass aus dem von dem Messgerät (60) ermittelten zweiten Kanalqualitäts- Feedback- Wert und dem ersten Kanalqualitäts- Feedback- Wert der Mobilstation (62) die Qualität des Kanalqualitäts- Feedback- Werts der Mobilstation (62) bestimmt wird.

10. Messverfahren nach Anspruch 9, **dadurch gekennzeichnet,** **dass** das Signal-Rausch-Verhältnis aus den von der Mobilstation (62) empfangenen Signalen ermittelt wird, und dass ein dritter Kanalqualitäts-Feedback-Wert aus den ermittelten Signal-Rausch-Verhältnissen durch die Mobilstation (62) ermittelt wird.

11. Messverfahren nach Anspruch 9 oder 10, **dadurch gekennzeichnet,** **dass** die Orthogonalität der von der Mobilstation (62) empfangenen Signale der zumindest zwei Antennen der Basisstation (64) bestimmt wird und **dass** ein vierter Kanalqualitäts-Feedback-Wert aus der von der Mobilstation (62) bestimmten Orthogonalität ermittelt wird.

12. Messverfahren nach einem der Ansprüche 9 bis 11, **dadurch gekennzeichnet,** **dass** die Orthogonalität der empfangenen Signale anhand von bekannten Signalanteilen der von der Basisstation (64) gesendeten Signale bestimmt wird.

13. Messverfahren nach einem der Ansprüche 9 bis 12, **dadurch gekennzeichnet,** **dass** während der Messung eine Kommunikationsverbindung zwischen der zu vermessenden Mobilstation (62) und der Basisstation (64) aufgebaut wird, **dass** keine Kommunikationsverbindung zwischen dem Messgerät (60) und der Basisstation (64) aufgebaut wird, und **dass** die Orthogonalität anhand von durch das Messgerät (60) empfangenen Kontrollkanal-Signalen der Basisstation (64) bestimmt wird.

14. Messverfahren nach einem der Ansprüche 9 bis 13, **dadurch gekennzeichnet,** **dass** während der Messung jeweils eine Kommunikationsverbindung zwischen der Mobilstation (62) und dem Messgerät (60) und/oder der Basisstation (64) und dem Messgerät (60) aufgebaut wird.

15. Messverfahren nach einem der Ansprüche 9 bis 14, **dadurch gekennzeichnet,** **dass** die Qualität des Kanalqualitäts-Feedback-Werts der Mobilstation (62) angezeigt wird.

## Claims

1. Measuring apparatus having a base station (64), a mobile station (62) and a measuring instrument (60) having at least two antennas (66) and a processing device (61), wherein the processing device (61) is contained in the measuring instrument (60), wherein the measuring instrument (60) and the mobile station (62) are designed to use at least two respective antennas (63, 66) to receive signals from the same at least two antennas (65) of the base station (64), wherein the mobile station (62) is designed to take the signals received by it and to ascertain a first channel quality feedback value therefrom, **characterized** **in that** the processing device (61) is designed to determine the orthogonality of the signals received by the measuring instrument (60), **in that** the processing device (61) is designed to take the orthgonality and to ascertain a second channel quality feedback value therefrom, and **in that** the processing device (61) is designed to take the second channel quality feedback value ascertained by it and the first channel quality feedback value from the mobile station (62) and to determine the quality of the channel quality feedback value from the mobile station (62) therefrom.

2.    Measuring apparatus according to Claim 1,
**characterized**
**in that** the mobile station (62) is designed to take the signals received by it and to ascertain the signal-to-noise ratio therefrom, and
**in that** the mobile station (62) is designed to take the ascertained signal-to-noise ratios and to ascertain a third channel quality feedback value therefrom.

3.    Measuring apparatus according to Claim 1 or 2,
**characterized**
**in that** the mobile station (62) is designed to determine the orthogonality of the signals received by it from the at least two antennas (65) of the base station (64), and
**in that** the mobile station (62) is designed to take the orthogonality determined by it and to ascertain a fourth channel quality feedback value therefrom.

4.    Measuring apparatus according to one of Claims 1 to 3,
**characterized**
**in that** the measuring instrument (60) and the mobile station (62) are connected to one another by means of a data line (69) or a radio link.

5.    Measuring apparatus according to one of Claims 1 to 4,
**characterized**
**in that** the processing device (61) is designed to determine the orthogonality of the received signals using known signal components of the signals sent by the base station (64).

6.    Measuring apparatus according to one of Claims 1 to 5,
**characterized**
**in that** the mobile station (62) is designed to set up a communication link to the base station (64) during the measurement,
**in that** the measuring instrument (60) is designed not to set up a communication link to the base station (64), and
**in that** the processing device (61) is designed to determine the orthogonality using control channel signals that are received by the measuring instrument (60) from the base station (64).

7.    Measuring apparatus according to one of Claims 1 to 6,
**characterized**
**in that** the mobile station (62) and/or the measuring instrument (60) are designed to set up a respective communication link to the base station (64) during the measurement.

8.    Measuring apparatus according to one of Claims 1 to 7,
**characterized**
**in that** the measuring instrument (60) has a display device (68),
**in that** the measuring instrument (60) is designed to display the quality of the channel quality feedback value from the mobile station (62) using the display device (68).

9.    Measuring method for determining channel quality feedback values,
wherein at least two respective antennas (63, 66) are used by a measuring instrument (60) and by a mobile station (62) that is to be gauged to receive signals from the same at least two antennas (65) of a base station (64),
wherein a first channel quality feedback value is ascertained from the signals received by the mobile station (62),
wherein the orthogonality of the signals received by the measuring instrument (60) is determined, **characterized**
**in that** the measuring instrument (60) takes the orthogonality and ascertains a second channel quality feedback value therefrom, and
**in that** the second channel quality feedback value ascertained by the measuring instrument (60) and the first channel quality feedback value from the mobile station (62) are taken and the quality of the channel quality feedback value from the mobile station (62) is determined therefrom.

10.    Measuring method according to Claim 9, **characterized**
**in that** the signal-to-noise ratio is ascertained from the signals received by the mobile station (62), and
**in that** a third channel quality feedback value is ascertained from the ascertained signal-to-noise ratios by the mobile station (62).

11.    Measuring method according to Claim 9 or 10,
**characterized**
**in that** the orthogonality of the signals received by the mobile station (62) from the at least two antennas of the base station (64) is determined, and
**in that** a fourth channel quality feedback value is ascertained from the orthogonality determined by the mobile station (62).

12.    Measuring method according to one of Claims 9 to 11,
**characterized**
**in that** the orthogonality of the received signals is determined using known signal components of the signals sent by the base station (64).

13. Measuring method according to one of Claims 9 to 12,
**characterized**
**in that** a communication link is set up between the mobile station (62) to be gauged and the base station (64) during the measurement,
**in that** a communication link is not set up between the measuring instrument (60) and the base station (64), and
**in that** the orthogonality is determined using control channel signals that are received by the measuring instrument (60) from the base station (64).

14. Measuring method according to one of Claims 9 to 13,
**characterized**
**in that** a respective communication link is set up between the mobile station (62) and the measuring instrument (60) and/or the base station (64) and the measuring instrument (60) during the measurement.

15. Measuring method according to one of Claims 9 to 14,
**characterized**
**in that** the quality of the channel quality feedback value from the mobile station (62) is displayed.


**Revendications**

1. Dispositif de mesure comportant une station de base (64), une station mobile (62) et un appareil de mesure (60) comportant au moins deux antennes (66) et une unité de traitement (61),
dans lequel l'unité de traitement (61) est contenue dans l'appareil de mesure (60),
dans lequel l'appareil de mesure (60) et la station mobile (62) sont réalisés pour recevoir grâce respectivement à au moins deux antennes (63, 66) des signaux provenant des mêmes au moins deux antennes (65) de la station de base (64),
dans lequel la station mobile (62) est réalisée pour déterminer une première valeur de rétroaction de qualité de canal à partir des signaux qu'elle reçoit,
**caractérisé en ce que**
l'unité de traitement (61) est réalisée pour déterminer l'orthogonalité des signaux reçus par l'appareil de mesure (60),
**en ce que** l'unité de traitement (61) est réalisée pour déterminer une seconde valeur de rétroaction de qualité de canal à partir de l'orthogonalité, et
**en ce que** l'unité de traitement (61) est réalisée pour déterminer la qualité de la valeur de rétroaction de qualité de canal de la station mobile (62) à partir de la seconde valeur de rétroaction de qualité de canal qu'elle a déterminée et de la première valeur de rétroaction de qualité de canal de la station mobile (62).

2. Dispositif de mesure selon la revendication 1, **caractérisé en ce que**
la station mobile (62) est réalisée pour déterminer le rapport signal-bruit à partir des signaux qu'elle a reçus, et
**en ce que** la station mobile (62) est réalisée pour déterminer une troisième valeur de rétroaction de qualité de canal à partir des rapports signal-bruit déterminés.

3. Dispositif de mesure selon la revendication 1 ou 2, **caractérisé en ce que**
la station mobile (62) est réalisée pour déterminer l'orthogonalité des signaux qu'elle a reçus d'au moins deux antennes (65) de la station de base (64), et
**en ce que** la station mobile (62) est réalisée pour déterminer une quatrième valeur de rétroaction de qualité de canal à partir de l'orthogonalité qu'elle a déterminée.

4. Dispositif de mesure selon l'une des revendications 1 à 3, **caractérisé en ce que** l'appareil de mesure (60) et la station mobile (62) sont reliés l'un à l'autre par une ligne de données (69) ou une liaison radio.

5. Dispositif de mesure selon l'une des revendications 1 à 4, **caractérisé en ce que**
l'unité de traitement (61) est réalisée pour déterminer l'orthogonalité des signaux reçus en regard des parties de signal connues des signaux envoyés depuis la station de base (64).

6. Dispositif de mesure selon l'une des revendications 1 à 5, **caractérisé en ce que**
la station mobile (62) est réalisée pour établir une liaison de communication vers la station de base (64) pendant la mesure,
**en ce que** l'appareil de mesure (60) est réalisé pour n'établir aucune liaison de communication vers la station de base (64), et
**en ce que** l'unité de traitement (61) est réalisée pour déterminer l'orthogonalité en regard des signaux de canal de contrôle de la station de base (64) reçus par l'appareil de mesure (60).

7. Dispositif de mesure selon l'une des revendications 1 à 6, **caractérisé en ce que**
la station mobile (62) et/ou l'appareil de mesure (60) sont réalisés pour établir respectivement une liaison de communication vers la station de base (64) pendant la mesure.

8. Dispositif de mesure selon l'une des revendications 1 à 7, **caractérisé en ce que**

l'appareil de mesure (60) comporte une unité d'affichage (68),

**en ce que** l'appareil de mesure (60) est réalisé pour afficher la qualité de la valeur de rétroaction de qualité de canal de la station mobile (62) au moyen du dispositif d'affichage (68).

9. Procédé de mesure pour déterminer des valeurs de rétroaction de qualité de canal,
dans lequel grâce respectivement à au moins deux antennes (63, 66) des signaux provenant des mêmes au moins deux antennes (65) d'une station de base (64) sont reçus par un appareil de mesure (60) et par une station mobile à mesurer (62),
dans lequel une première valeur de rétroaction de qualité de canal est déterminée à partir des signaux reçus par la station mobile (62),
dans lequel l'orthogonalité des signaux reçus par l'appareil de mesure (60) est déterminée,
**caractérisé en ce que**
une seconde valeur de rétroaction de qualité de canal est déterminée à partir de l'orthogonalité par l'appareil de mesure (60), et
**en ce que** la qualité de la valeur de rétroaction de qualité de canal de la station mobile (62) est déterminée à partir de la seconde valeur de rétroaction de qualité de canal déterminée par l'appareil de mesure (60) et par la première valeur de rétroaction de qualité de canal de la station mobile (62).

10. Procédé de mesure selon la revendication 9, **caractérisé en ce que**
le rapport signal-bruit est déterminé à partir des signaux reçus par la station mobile (62), et
**en ce qu'**une troisième valeur de rétroaction de qualité de canal est déterminée par la station de base à partir des rapports signal-bruit déterminés.

11. Procédé de mesure selon la revendication 9 ou 10, **caractérisé en ce que**
l'orthogonalité des signaux reçus par la station mobile (62) des au moins deux antennes de la station de base (64) est déterminée et
**en ce qu'**une quatrième valeur de rétroaction de qualité de canal est déterminée à partir de l'orthogonalité déterminée de la station mobile (62).

12. Procédé de mesure selon l'une des revendications 9 à 11, **caractérisé en ce que**
l'orthogonalité des signaux reçus est déterminée en regard des parties de signal connues des signaux envoyés par la station de base (64).

13. Procédé de mesure selon l'une des revendications 9 à 12, **caractérisé en ce que**
pendant la mesure, une liaison de communication est établie entre la station mobile à mesurer (62) et la station de base (64),

en ce qu'aucune liaison de communication entre l'appareil de mesure (60) et la station de base (64) n'est établie, et
**en ce que** l'orthogonalité est déterminée en regard des signaux de canal de contrôle de la station de base (64) reçus par l'appareil de mesure (60).

14. Procédé de mesure selon l'une des revendications 9 à 13, **caractérisé en ce que**
une liaison de communication respective est établie entre la station mobile (62) et l'appareil de mesure (60) et/ou la station de base (64) et l'appareil de mesure (60) pendant la mesure.

15. Procédé de mesure selon l'une des revendications 9 à 14, **caractérisé en ce que**
la qualité de la valeur de rétroaction de qualité de canal de la station mobile (62) est affichée.

Fig. 1

Fig. 2

Fig. 3a

Fig. 3b

**Fig. 4**

| Orthogonalität bestimmen | 80 |
| Kanalqualität bestimmen | 81 |
| Kanalqualitäts-Feedback Mobilstation erfassen | 82 |
| Kanalqualität mit Kanalqualitäts-Feedback vergleichen | 83 |
| Kanalqualitäts-Feedback-Qualität bestimmen | 84 |
| Kanalqualitäts-Feedback-Qualität anzeigen | 85 |

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070064632 A1
- US 20060023745 A1